# EUROPÄISCHE PATENTANMELDUNG

(11) **EP 1 879 087 A2**
(43) Veröffentlichungstag der Anmeldung: **16.01.2008**
(21) Anmeldenummer: 07013244.4
(22) Anmeldetag: 06.07.2007
(51) Int. Cl.: G05B 19/23

(54) **Positionserfassungsanordnung für ein motorisch verstellbares Funktionselement in einem Kraftfahrzeug**

(30) Priorität: 10.07.2006 DE 202006010698 U; 19.04.2007 DE 202007005749 U
(71) Anmelder: Brose Schliesssysteme GmbH & Co. KG, 42369 Wuppertal (DE)
(72) Erfinder: Checrallah, Kachouh, 44227 Dortmund (DE)
(74) Vertreter: Gesthuysen, von Rohr & Eggert

(57) **Zusammenfassung**

Die vorliegende Erfindung betrifft eine Positionserfassungsanordnung für ein motorisch verstellbares Funktionselement (1) in einem Kraftfahrzeug, wobei eine Antriebsanordnung (2) über einen Antriebsstrang (3) mit dem Funktionselement (1) gekoppelt und das Funktionselement (1) dadurch motorisch verstellbar ist, wobei zwei inkrementale Drehgeber (4, 5) vorgesehen sind, die dem Antriebsstrang (3) zugeordnet sind und wobei eine Steuerungseinrichtung (6) vorgesehen ist, die mit den Drehgebern (4, 5) gekoppelt ist. Es wird vorgeschlagen, daß die Anordnung so getroffen ist, daß bei der Verstellung des Funktionselements (1) ein Versatz zwischen den Drehgebersignalen der beiden Drehgeber (4, 5) entsteht und daß die Steuerungseinrichtung (6) so ausgelegt ist, daß sie aus dem Versatz die Absolutposition des Funktionselements (1) ermittelt.

## Beschreibung

Die vorliegende Erfindung betrifft eine Positionserfassungsanordnung für ein motorisch verstellbares Funktionselement in einem Kraftfahrzeug mit den Merkmalen des Oberbegriffs von Anspruch 1. Ferner betrifft die Erfindung eine Antriebseinheit in einem Kraftfahrzeug mit den Merkmalen des Oberbegriffs von Anspruch 18 und eine Funktionseinheit in einem Kraftfahrzeug mit den Merkmalen des Oberbegriffs von Anspruch 19.

Der Begriff "verstellbares Funktionselement" ist vorliegend umfassend zu verstehen. Entsprechend fallen hierunter ganz allgemein Stellelemente in einem Kraftfahrzeug sowie Verschlußelemente wie eine Heckklappe, ein Heckdeckel, eine Motorraumklappe, eine Laderaumklappe, eine Seitentür - auch Schiebetür - und ein Hubdach eines Kraftfahrzeugs. Ferner sind hiervon motorisch verstellbare Scheiben, Spiegel oder Fahrzeugsitze umfaßt.

Im Zuge der Komforterhöhung moderner Kraftfahrzeuge kommt der motorischen Verstellung von Funktionselementen, beispielsweise der Heckklappe eines Kraftfahrzeugs, wachsende Bedeutung zu. Hierfür ist eine Antriebsanordnung vorgesehen, die über einen Antriebsstrang mit dem jeweiligen Funktionselement gekoppelt ist.

Eine bekannte Antriebsanordnung für eine Heckklappe (DE 20 2005 000 559 U1) weist zwei Spindelantriebe auf, die einerseits mit der Karosserie des Kraftfahrzeugs und andererseits mit der Heckklappe gekoppelt sind. Die beiden Spindelantriebe sind an den gegenüberliegenden Seiten der Heckklappe angeordnet.

Eine andere bekannte Antriebsanordnung für eine Heckklappe (DE 20 2004 016 543 U1) ist mit einem Schubstangenantrieb ausgestattet, wobei die Schubstange an einem mit der Heckklappe gekoppelten Umlenkhebel angelenkt ist.

Besondere Bedeutung bei solchen Antriebsanordnungen kommt der Steuerung bzw. Regelung der motorischen Verstellung des Funktionselements zu. Hierfür ist eine Steuerungseinrichtung vorgesehen, die basierend auf der Absolutposition des Funktionselements geeignete Steuersignale an die Antriebsanordnung sendet. Mit "Absolutposition" ist hier eine Angabe gemeint, die ohne weitere Berechnung Aufschluß über die tatsächliche Stellung des Funktionselements gibt. Bei einer Heckklappe ist dies beispielsweise eine Winkelangabe, die auf den nicht verstellbaren Teil der Karosserie bezogen ist.

Es liegt auf der Hand, daß die Steuerung bzw. Regelung der motorischen Verstellung nur so gut sein kann, wie die in der Steuerungseinrichtung vorliegenden Positionsdaten über die aktuelle Absolutposition des Funktionselements. Der Ermittlung dieser Positionsdaten dient die in Rede stehende Positionserfassungsanordnung.

Die bekannte Positionserfassungsanordnung (DE 101 45 711 B4), von der die Erfindung ausgeht, ist mit zwei inkrementalen Drehgebern ausgestattet. Dabei dient der eine Drehgeber der Erfassung der Position des verstellbaren Funktionselements. Diese Erfassung erfolgt durch Abzählen der von dem inkrementalen Drehgeber erzeugten Impulse.

Der zweite Drehgeber erzeugt Impulse, die phasenversetzt zu den Impulsen des ersten Drehgebers sind. Die Drehgebersignale des zweiten Drehgebers werden ausschließlich zur Bestimmung der aktuellen Verstellrichtung des Funktionselements genutzt.

Problematisch bei der bekannten Positionserfassungsanordnung ist zunächst die Tatsache, daß die mit dem Abzählen von Impulsen erreichbare Genauigkeit vergleichsweise gering ist. Hinzu kommt, daß der steuerungstechnische Realisierungsaufwand vergleichsweise hoch ist. Schließlich kommt es bei solchen Systemen häufig zu Problemen im Notfall, beispielsweise bei einem Ausfall der Spannungsversorgung. Wird die Absolutposition des Funktionselements nämlich nicht gespeichert, so liegt beim Wiederanfahren des Funktionselements keine Information mehr über dessen Absolutposition vor. Es ist dann eine aufwendige Referenzierung notwendig.

Es darf ferner darauf hingewiesen werden, daß für die Erfassung der Absolutposition des Funktionselements auch als Winkelkodierer ausgestaltete Drehgeber Anwendung finden. Solche Winkelkodierer erzeugen je nach Winkelstellung codierte Drehgebersignale, die für sich bereits Aufschluß über die Absolutposition geben. Solche Winkelkodierer sind als Singleturn-Winkelkodierer und als Multiturn-Winkelkodierer bekannt. Bei einem Singleturn-Winkelkodierer wiederholen sich die Drehgebersignale nach einer kompletten Umdrehung periodisch. Bei einem Multiturn-Winkelkodierer ist die Kodierung der Absolutposition über mehrere Drehungen hinweg vorgesehen.

Die Anwendung von Winkelkodierern ist auch aus dem Bereich der Heckklappen und Heckdeckel von Kraftfahrzeugen bekannt (DE 199 44 554 A1). Nachteilig bei Winkelkodierern sind stets die hohen Kosten. Ein Beispiel hierfür zeigt die DE 33 42 940 C2.

Der Erfindung liegt das Problem zugrunde, die bekannte Positionserfassungsanordnung derart ausgestalten und weiterzubilden, daß die Erfassung der Absolutposition des Funktionselements mit hoher Genauigkeit, hoher Betriebssicherheit auch im Notfall und mit geringem Kostenaufwand realisierbar ist.

Das obige Problem wird bei einer Positionserfassungsanordnung gemäß dem Oberbegriff von Anspruch 1 durch die Merkmale des kennzeichnenden Teils von Anspruch 1 gelöst.

Wesentlich ist zunächst die Erkenntnis, daß mit zwei inkrementalen und damit kostengünstigen Drehgebern auf einfache Weise Absolutpositionen ermittelbar sind. Es ist lediglich dafür zu sorgen, daß zwischen den Drehgebersignalen ein Versatz entsteht, der bei der Verstellung des Funktionselements laufend fortschreitet und damit für die Ermittlung der Absolutposition des Funktionselements genutzt werden kann. Dabei handelt es sich um eine indirekte Messung der Absolutposition des Funktionselements, da die Messung nicht am Funktionselement selbst, sondern im Antriebsstrang durchgeführt wird.

Bei der bevorzugten Ausgestaltung gemäß Anspruch 2 läßt sich der Versatz einfach dadurch realisieren, daß die beiden inkrementalen Drehgeber unterschiedlichen Antriebskomponenten des Antriebsstrangs zugeordnet sind, die bei der Verstellung des Funktionselements unterschiedlich schnell drehen.

Von besonderer Bedeutung ist hier die Tatsache, daß die beiden Drehgeber ausgewählten Antriebskomponenten des Antriebsstrangs zugeordnet sind, die ja ohnehin vorhanden sind. Auf ein zusätzliches Getriebe, wie es beispielsweise bei üblichen Multiturn-Winkelkodierern vorgesehen ist, kann grundsätzlich verzichtet werden.

Um sicherzustellen, daß der obige Versatz zwischen den Drehgebersignalen entsteht, ist es gemäß Anspruch 3 vorgesehen, daß die beiden Drehgeber bei konstanter Verstellung des Funktionselements jeweils Drehgebersignale mit unterschiedlichen Impulsfrequenzen erzeugen. Dabei gibt es grundsätzlich zwei Möglichkeiten, die Absolutposition des Funktionselements aus den Drehgebersignalen der beiden Drehgeber zu ermitteln.

Eine bevorzugte Variante der Ermittlung der Absolutposition des Funktionselements ist Gegenstand von Anspruch 6. Hier ist die Zeitdifferenz zwischen einem Impuls des einen Drehgebers und dem darauffolgenden Impuls des anderen Drehgebers ein Maß für die Absolutposition des Funktionselements.

Eine andere bevorzugte Möglichkeit der Ermittlung der Absolutposition ist Gegenstand von Anspruch 7. Hier ist die Phasendifferenz zwischen dem aktuellen Impuls des einen Drehgebers und dem aktuellen Impuls des anderen Drehgebers ein Maß für die Absolutposition des Funktionselements.

Anspruch 9 enthält bevorzugte Möglichkeiten für die Ausgestaltung des Drehgebers. Als besonders kostengünstig und gleichzeitig robust ist die Ausgestaltung als Hall-Sensor zu nennen.

Die bevorzugte Ausgestaltung gemäß Anspruch 12 ist besonders vorteilhaft bei der Erfassung der Absolutposition einer Heckklappe o. dgl. eines Kraftfahrzeugs. Die notwendigen unterschiedlichen Drehgeschwindigkeiten lassen sich hier auf einfache Weise durch eine unterschiedliche Ansteuerung der beiden Spindelantriebe realisieren.

Ebenfalls vorteilhaft bei der Ausgestaltung des Funktionselements als Heckklappe o.dgl. eines Kraftfahrzeugs ist die bevorzugte Ausgestaltung gemäß den Ansprüchen 13, 14. Der Versatz zwischen den Drehgebersignalen der beiden Drehgeber wird hier vorzugsweise durch aufeinander abgestimmte Auslegungen der Drehgebergetriebe realisiert.

Nach einer zweiten Lehre, der eigenständige Bedeutung zukommt, wird eine Antriebseinheit für ein verstellbares Funktionselement mit der beschriebenen Antriebsanordnung zur motorischen Verstellung des Funktionselements und der beschriebenen Positionserfassungsanordnung zur Erfassung der Position des Funktionselements als solche beansprucht. Auf die obigen Ausführungen darf insoweit verwiesen werden.

Nach einer dritten Lehre, der ebenfalls eigenständige Bedeutung zukommt, wird eine Funktionseinheit in einem Kraftfahrzeug mit dem beschriebenen Funktionselement, der beschriebenen Antriebsanordnung und der beschriebenen Positionserfassungsanordnung zur Erfassung der Position des Funktionselements als solche beansprucht. Auch hierzu darf auf die obigen Ausführungen verwiesen werden.

Im folgenden wird die Erfindung anhand von Ausführungsbeispielen näher erläutert. In der Zeichnung zeigt
- Fig. 1: in schematischer Darstellung das Heck eines Kraftfahrzeugs bei geöffneter Heckklappe mit einer Antriebsanordnung in einer Seitenansicht,
- Fig. 2: die Antriebsanordnung des in Fig. 1 dargestellten Kraftfahrzeugs mit einer erfindungsgemäßen Positionserfassungsanordnung in einer Ansicht vom Innenraum des Kraftfahrzeugs aus,
- Fig. 3: eine weitere Ausführungsform einer Antriebsanordnung für das in Fig. 1 dargestellte Kraftfahrzeug mit einer weiteren erfindungsgemäßen Positionserfassungsanordnung im nicht montierten Zustand in einer Ansicht von oben,
- Fig. 4: ein Impulsdiagramm der Drehgebersignale der beiden Drehgeber einer vorschlagsgemäßen Positionserfassungsanordnung bei konstanter Verstellung des Funktionselements und
- Fig. 5: in schematischer Darstellung eine erfindungsgemäße Positionserfassungsanordnung in einer bevorzugten Ausführungsform.

Die vorschlagsgemäße Positionserfassungsanordnung läßt sich auf alle möglichen Funktionselemente 1, insbesondere Verschlußelemente, in einem Kraftfahrzeug anwenden. Hierzu wird auf die Aufzählung in der Beschreibungseinleitung verwiesen, wobei die Anwendung auf Heckklappen und Seitentüren im Vordergrund steht. Die Zeichnung betrifft die Anwendung der Positionserfassungsanordnung für ein als Heckklappe ausgestaltetes Funktionselement 1. Dies ist nicht beschränkend zu verstehen.

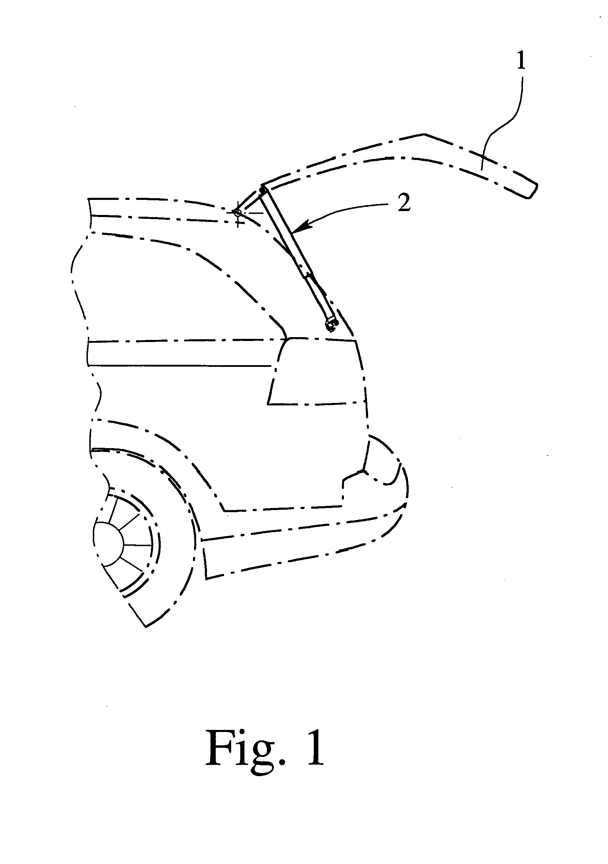

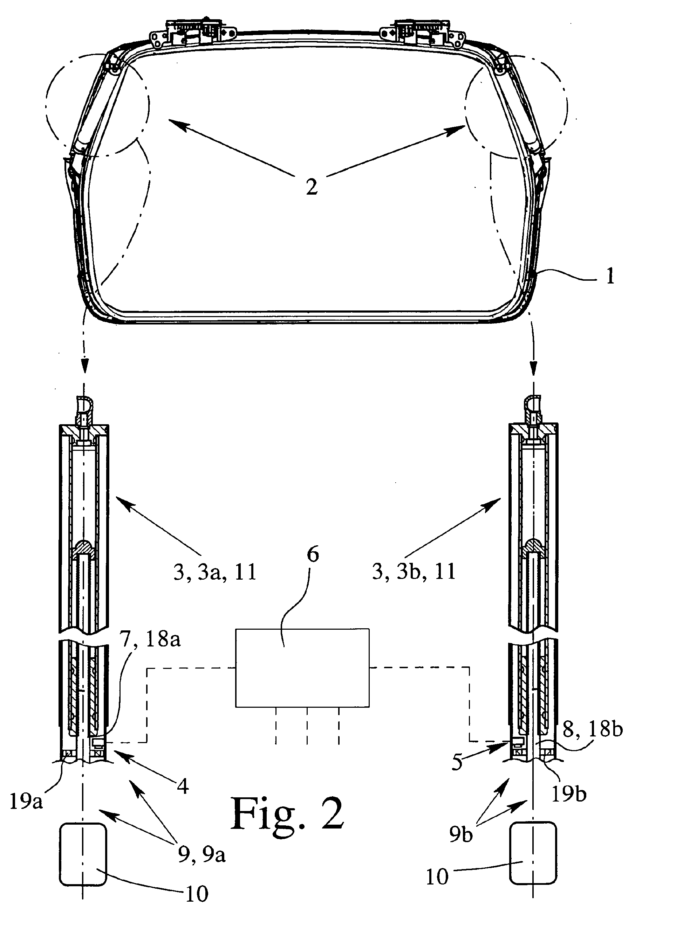

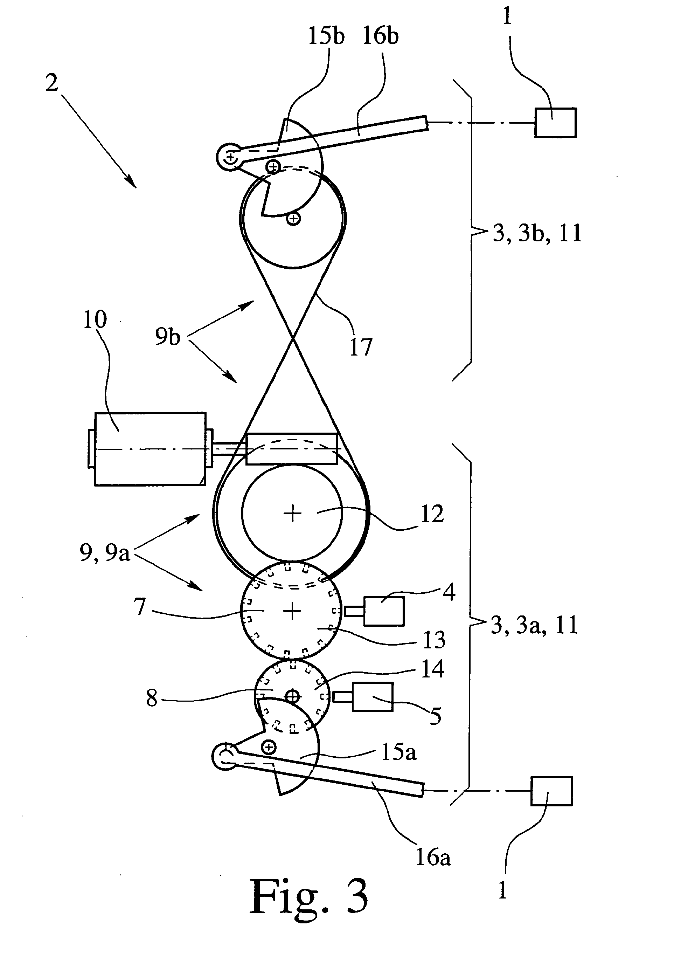

Bei der in den Fig. 1 und 2 dargestellten Ausführungsform ist eine spindelbasierte Antriebsanordnung 2 zur motorischen Verstellung der Heckklappe 1 vorgesehen. Fig. 3 zeigt dagegen eine schubstangenbasierte Antriebsanordnung 2 für eine Heckklappe 1. Bei beiden Ausführungsformen ist es so, daß die jeweilige Antriebsanordnung 2 über einen Antriebsstrang 3 mit der Heckklappe 1 gekoppelt ist und die Heckklappe 1 dadurch motorisch verstellbar ist. Der Antriebsstrang 3 ist regelmäßig Bestandteil der Antriebsanordnung 2.

Im folgenden wird die grundsätzliche Arbeitsweise der Positionserfassungsanordnung zunächst losgelöst von den dargestellten Ausführungsformen erläutert.

Die Positionserfassungsanordnung ist mit zwei inkrementalen Drehgebern 4, 5 ausgestattet, die dem Antriebsstrang 3 zugeordnet sind. Inkrementale Drehgeber zeichnen sich dadurch aus, daß sie über eine volle Umdrehung im wesentlichen identische impulsartige Drehgebersignale erzeugen, die sich mit jeder Umdrehung periodisch wiederholen. Dabei kann es auch sein, daß pro Umdrehung nur ein einziger Impuls erzeugt wird.

Ferner ist eine Steuerungseinrichtung 6 vorgesehen, die mit den Drehgeben 4, 5 gekoppelt ist und u.a. der Auswertung der von den Drehgebern 4, 5 erzeugten Drehgebersignale dient.

Die Anordnung ist so getroffen, daß bei der Verstellung des Funktionselements 1 ein Versatz zwischen den Drehgebersignalen der beiden Drehgeber 4, 5 entsteht.

Es ist ferner vorzugsweise so, daß im eingebauten Zustand der eine Drehgeber 4 einer ersten Antriebskomponente 7 des Antriebsstrangs 3 und der zweite Drehgeber 5 einer zweiten Antriebskomponente 8 des Antriebsstrangs 3 zugeordnet ist, wobei diese beiden Antriebskomponenten 7, 8 bei der Verstellung des Funktionselements 1 unterschiedlich schnell drehen (Fig. 2, 3). Mit den unterschiedlichen Drehgeschwindigkeiten der beiden Antriebskomponenten 7, 8 läßt sich ein während der Verstellung des Funktionselements 1 fortschreitender Versatz zwischen den beiden impulsartigen Drehgebersignalen erzielen.

Es wurde bereits erläutert, daß der resultierende Versatz als Maß für die aktuelle Absolutposition des Funktionselements 1 genutzt werden kann. Entsprechend ist es vorgesehen, daß die Steuerungseinrichtung 6 so ausgelegt ist, daß sie daraus die aktuelle Absolutposition des Funktionselements 1 ermittelt. Diese Auslegung der Steuerungseinrichtung 6 umfaßt sowohl deren Hardware als auch deren Software.

Durch die unterschiedlichen Drehgeschwindigkeiten der beiden obigen Antriebskomponenten 7, 8 ist es so, daß die Drehgeber 4, 5 bei unterstellter konstanter Verstellung des Funktionselements 1 jeweils Drehgebersignale mit unterschiedlichen Impulsfrequenzen erzeugen, wobei die eine Impulsfrequenz kein ganzzahliges Vielfaches der anderen Impulsfrequenz sein darf. Damit ist gewährleistet, daß der Versatz zwischen den Drehgebersignalen über mehrere Umdrehungen der beiden Antriebskomponenten 7, 8 wie oben beschrieben fortschreitet.

Besonders praxisgerecht ist die Ausgestaltung, bei der sich die eine Impulsfrequenz nur geringfügig von der anderen Impulsfrequenz unterscheidet. Damit läßt sich ein relativ großer Meßbereich realisieren.

Vorzugsweise ist die Anordnung so getroffen, daß der Versatz über den gesamten Verstellweg des Funktionselements 1 nicht größer ist als eine Periode des Drehgebersignals mit höherer Impulsfrequenz, da nur so eine eindeutige Zuordnung des Versatzes zu der Stellung des Funktionselements 1 möglich ist. Andernfalls ist dafür zu sorgen, daß jedes Überschreiten dieser maximalen Versatzgröße gespeichert und bei der Ermittlung der Absolutposition berücksichtigt wird. Diese Überlegung geht wieder aus von der Situation der konstanten Verstellung des Funktionselements 1.

In besonders bevorzugter Ausgestaltung ist die Anordnung so getroffen, daß die beiden Drehgeber 4, 5 bei der Verstellung des Funktionselements 1 Drehgebersignale mit zumindest qualitativ identischer Impulsform erzeugen. Damit ist gemeint, daß die einzelnen Impulse auf der Zeitachse gesehen zwar gestreckt oder gestaucht sein können, von dieser Stauchung oder Streckung abgesehen aber hinsichtlich ihrer Form identisch sind. Vorzugsweise sind alle Impulse im wesentlichen sinusförmig, parabelförmig, sägezahnförmig o. dgl..

Es sind zwei bevorzugte Möglichkeiten denkbar, den obigen Versatz zwischen den Drehgebersignalen der beiden Drehgeber und damit die Absolutposition des Funktionselements 1 meßtechnisch zu erfassen.

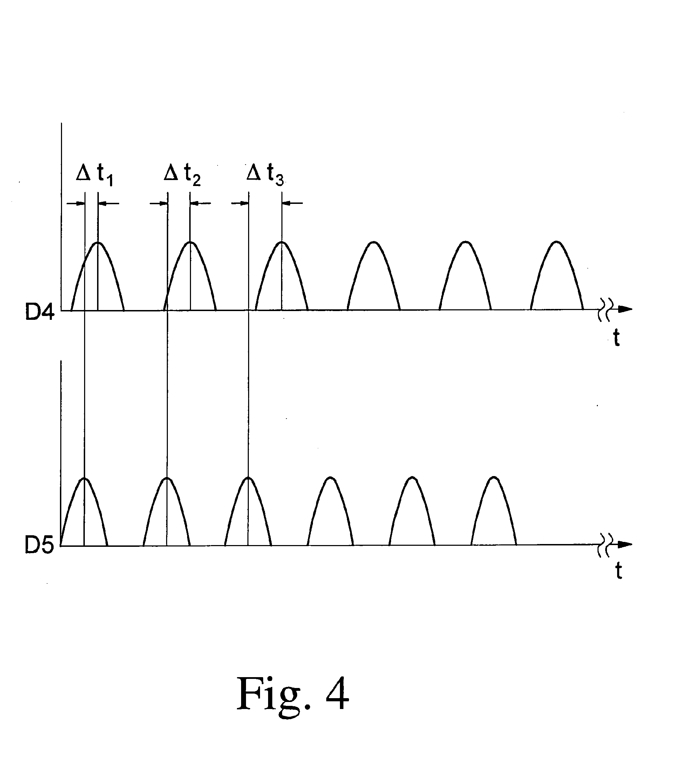

Bei einer ersten bevorzugten Möglichkeit zur Erfassung des Versatzes ist es vorgesehen, daß die Steuerungseinrichtung 6 die Absolutposition des Funktionselements 1 aus der Zeitdifferenz zwischen einem Impuls des einen Drehgebers 4 und dem darauffolgenden Impuls des anderen Drehgebers 5 ermittelt. Beispielsweise wird hier der Abstand der Impulsspitzen der beiden Drehgebersignale bestimmt. Dies ist beispielhaft in Fig. 4 dargestellt. Der fortschreitende Versatz zwischen den Drehgebersignalen ("D4": Drehgeber 4; "D5": Drehgeber 5) ist dort durch die Zeitdifferenzen Δt₁, Δt₂ und Δt₃ dargestellt.

Der Darstellung in Fig. 4 liegt die Situation der konstanten Verstellung des Funktionselements 1 zugrunde. Die Impulsformen sind dabei nur beispielhaft gewählt.

Bei der oben beschriebenen Ermittlung der Absolutposition des Funktionselements 1 aus der Zeitdifferenz ist zu berücksichtigen, daß diese Zeitdifferenz mit der Verstellgeschwindigkeit des Funktionselements 1 variiert. Entsprechend ist es notwendig, die ermittelte Zeitdifferenz auf die jeweilige Verstellgeschwindigkeit zu beziehen.

Die Verstellgeschwindigkeit kann ohne weiteres aus den zuvor ermittelten Werten gewonnen werden. Dabei kommt es nicht darauf an, die tatsächliche Verstellgeschwindigkeit zu ermitteln. Es ist lediglich notwendig, einen Wert zu bestimmen, der ein Maß für die aktuelle Verstellgeschwindigkeit darstellt. Ein solches Maß läßt sich beispielsweise aus der Frequenz und/oder der Wellenlänge eines der Drehgebersignale ermitteln. Auch eine Motordrehzahl kann als Maß für die Verstellgeschwindigkeit genutzt werden. Letztlich ist die Drehzahl oder Drehgeschwindigkeit aller Komponenten nutzbar, die mit dem Funktionselement 1 bewegungsgekoppelt sind.

Die zweite bevorzugte Möglichkeit zur Erfassung des Versatzes besteht darin, daß die Steuerungseinrichtung 6 die Absolutposition des Funktionselements 1 aus der Phasendifferenz zwischen dem aktuellen Impuls des einen Drehgebers 4 und dem aktuellen Impuls des anderen Drehgebers 5 ermittelt. Diese Variante ist dann anwendbar, wenn die Impulse eine meßtechnisch ohne weiteres auflösbare Formgebung, beispielsweise eine Sinusform, eine Parabelform oder eine Sägezahnform o. dgl., aufweisen. Dann läßt sich aus der Phasendifferenz entsprechend der Versatz zwischen den beiden Drehgebersignalen ermitteln.

Die Ermittlung der Absolutposition des Funktionselements 1 aus der Phasendifferenz zwischen dem aktuellen Impuls des einen Drehgebers 4 und dem aktuellen Impuls des anderen Drehgebers 5 ist besonders dann vorteilhaft, wenn über die Verstellung des Funktionselements 1 gesehen die beiden Drehgeber 4, 5 jeweils zu jedem Zeitpunkt ein Drehgebersignal abgeben, das Aufschluß über die Phase und damit über die Phasendifferenz gibt. Dies ist beispielsweise dann gegeben, wenn diese Drehgebersignale aus vorzugsweise sinusförmigen, parabelförmigen oder sägezahnförmigen Impulsen bestehen, die unmittelbar aneinander anschließen. Vorzugsweise ist es dabei vorgesehen, daß die Phasendifferenz laufend, und nicht nur in bestimmten Triggerzeitpunkten o.dgl., ermittelt wird.

Die Ermittlung der Absolutposition des Funktionselements 1 aus der Phasendifferenz zwischen dem aktuellen Impuls des einen Drehgebers 4 und dem aktuellen Impuls des anderen Drehgebers 5 ist besonders vorteilhaft, da die Ermittlung der Absolutposition möglich ist, ohne das Funktionselement 1 verstellen zu müssen. Eine weiter oben angesprochene Ermittlung einer Zeitdifferenz ist ja nicht erforderlich.

Grundsätzlich kann es vorgesehen sein, daß die beiden Drehgeber 4, 5 identisch ausgestaltet sind und lediglich unterschiedlichen Antriebskomponenten 7, 8 zugeordnet sind. In bevorzugter Ausgestaltung ist es allerdings so, daß die Drehgeber 4, 5 jeweils unterschiedlich konfiguriert sind. Damit ist gemeint, daß sie bei unterstellter identischer Umdrehung unterschiedliche Drehgebersignale erzeugen. Beispielsweise kann es vorgesehen sein, daß die Drehgeber 4, 5 pro Umdrehung der entsprechenden Antriebskomponente 7, 8 Drehgebersignale mit unterschiedlicher Impulsanzahl generieren. Damit läßt sich auf einfache Weise ein optimales Verhältnis der Impulsfrequenzen der beiden Drehgebersignale einstellen.

Für die konstruktive Realisierung der Drehgeber 4, 5 sind zahlreiche Möglichkeiten denkbar. Beispielsweise könnten die Drehgeber 4, 5 als magnetische, als induktive oder als optische Sensoren ausgestaltet sein.

In besonders bevorzugter Ausgestaltung sind die Drehgeber 4, 5 als Hall-Sensoren ausgestaltet, die kostengünstig und gleichzeitig robust sind. Dann werden die Antriebskomponenten 7, 8, denen die Drehgeber 4, 5 zugeordnet sind, mit einer bestimmten Anzahl von Magneten versehen, die bei der Drehung der Antriebskomponenten 7, 8 am Hall Sensor vorbeilaufen. Durch eine Erhöhung der Anzahl der Magnete läßt sich die Meßgenauigkeit auf einfache Weise steigern.

Es kann auch vorteilhaft sein, die Drehgeber 4, 5 als MR-Winkelsensoren oder als AMR-Winkelsensoren auszugestalten, die dann im Sinne von inkrementellen Drehgebern genutzt werden. Hiermit läßt sich insgesamt eine hohe Meßgenauigkeit erreichen.

Im folgenden wird die Arbeitsweise der vorschlagsgemäßen Positionserfassungsanordnung anhand der dargestellten und insoweit bevorzugten Ausführungsformen erläutert. Hier ist das Funktionselement 1 wie erläutert als Verschlußelement "Heckklappe o. dgl." eines Kraftfahrzeugs ausgestaltet, die mittels der Antriebsanordnung 2 motorisch verstellbar ist. Andere Verschlußelemente, insbesondere eine Seitentür, sind hier anwendbar.

Die Antriebsanordnung 2 weist einen Antrieb 9 mit einer Motoreinheit 10 und einem nachgeschalteten Getriebe 11 auf, wobei der Antrieb 9 über den Antriebsstrang 3 auf das Funktionselement 1 wirkt. Es wird noch erläutert, daß auch mehr als ein Antrieb 9 vorgesehen sein kann.

Bei der in Fig. 3 dargestellten Antriebsanordnung 2 ist zu erkennen, daß das Getriebe 11 als mehrstufiges Getriebe 11 ausgestaltet ist (dabei wird zunächst nur der in Fig. 3 untere Bereich der Antriebsanordnung 2 berücksichtigt). Teil des Getriebes 11 sind bei der in Fig. 3 dargestellten Ausführungsform jedenfalls die Stirnräder 12, 13 und 14. Es ist der Darstellung in Fig. 3 ferner zu entnehmen, daß dem Stirnrad 13 der Drehgeber 4 und dem Stirnrad 14 der Drehgeber 5 zugeordnet ist. Die Drehgeber 4, 5 sind als Hall-Sensoren ausgestaltet. Entsprechend sind die Stirnräder 13, 14 an ihrem Umfang mit entsprechenden Magneten ausgestattet. Die beiden Stirnräder 13, 14 sind durch deren unterschiedliche Durchmesser unterschiedlich schnell drehende Antriebskomponenten 7, 8 in obigem Sinne.

Es darf noch darauf hingewiesen werden, daß sich an das Stirnrad 14 ein Exzenter 15a mit einer daran angelenkten Schubstange 16a anschließt. Die Schubstange 16a ist im montierten Zustand antriebstechnisch mit der Heckklappe 1 gekoppelt (in Fig. 1 ganz schematisch dargestellt). Eine zweite Schubstangenanordnung 15b, 16b ist über einen Seil- oder Riementrieb 17 an die Motoreinheit 10 angeschlossen. Auch die zweite Schubstange 16b ist im montierten Zustand antriebstechnisch mit der Heckklappe 1 gekoppelt. Das Getriebe 11 einerseits und der Seil- oder Riementrieb 17 andererseits sind so ausgelegt, daß die Schubstangen 16a, 16b stets synchron laufen.

Letztlich ist es bei der in Fig. 3 dargestellten Ausführungsform so, daß die Antriebsanordnung 2 zwei Antriebe 9a, 9b aufweist, die über zwei Teilantriebsstränge 3a, 3b auf das Funktionselement 1 wirken. Dabei ist die Motoreinheit 10 des einen Antriebs 9a gleichzeitig die Motoreinheit 10 des anderen Antriebs 9b. Die beiden Antriebe 9a, 9b teilen sich also die eine Motoreinheit 10.

Anders ist dies bei der in den Fig. 1 und 2 dargestellten Antriebsanordnung 2. Hier sind zwei voneinander getrennte Antriebe 9a, 9b vorgesehen, wobei jeder Antrieb 9a, 9b eine eigene, nur schematisch dargestellte Motoreinheit 10 mit einem nachgeschalteten Getriebe 11 aufweist. Die beiden Antriebe 9a, 9b wirken über zwei Teilantriebsstränge 3a, 3b auf die Heckklappe 1. Wesentlich dabei ist, daß der eine Drehgeber 4 einer Antriebskomponente 7 des einen Teilantriebsstrangs 3a und der andere Drehgeber 5 einer Antriebskomponente 8 des anderen Teilantriebsstrangs 3b zugeordnet ist, wobei diese beiden Antriebskomponenten 7, 8 bei der Verstellung des Funktionselements 1 unterschiedlich schnell drehen. Wie dies realisiert ist, wird noch erläutert.

Bei der in den Fig. 1 und 2 dargestellten Ausführungsform sind die beiden Antriebe 9a, 9b als Spindelantriebe mit einem Spindel-Spindelmutter-Getriebe ausgestaltet. Dabei ist der eine Drehgeber 4 dem einen Spindelantrieb 9a und der andere Drehgeber 5 dem anderen Spindelantrieb 9b zugeordnet. Im einzelnen ist es hier so, daß der eine Drehgeber 4 der Spindel 18a des einen Spindelantriebs 9a und der andere Drehgeber 5 der Spindel 18b des anderen Spindelantriebs 9b zugeordnet ist. Bei dieser bevorzugten Ausführungsform entsprechen die beiden Spindeln 18a, 18b also den Antriebskomponenten 7, 8 in obigem Sinne.

Unterschiedliche Drehgeschwindigkeiten für die Spindeln 18a, 18b lassen sich ohne weiteres durch eine entsprechende Ansteuerung der Motoreinheiten der Spindelantriebe 9a, 9b erreichen. Um trotz der unterschiedlichen Drehgeschwindigkeiten der Spindeln 18a, 18b einen Synchronlauf der beiden Schubstangen 16a, 16b zu erreichen, wird vorgeschlagen, daß die Spindeln 18a, 18b der beiden Spindelantriebe 9a, 9b unterschiedliche Spindelsteigungen aufweisen. Dabei ist es vorzugsweise so, daß die Spindelsteigung der Spindel 18a des einen Spindelantriebs 9a etwa 5% größer ist als die Spindelsteigung der Spindel 18b des anderen Spindelantriebs 9b.

Die jeweilige Anordnung der Drehgeber 4, 5 ist in Fig. 2 den ausschnittsweisen Darstellungen zu entnehmen. Die Spindeln 18a, 18b sind hier jeweils mit einer Meßscheibe 19a, 19b ausgestattet, die jeweils mit einer bestimmten Anzahl von Magneten für die vorzugsweise als Hall-Sensoren ausgestalteten Drehgeber 4, 5 bestückt sind.

Es gibt zahlreiche weitere Möglichkeiten zur Anordnung der beiden inkrementalen Drehgeber 4, 5. Beispielsweise könnte es bei einem der in Fig. 1 und 2 dargestellten Spindelantriebe 9a, 9b vorgesehen sein, daß der eine Drehgeber 4 der Motoreinheit oder einem zwischengeschalteten Getriebeabschnitt und der zweite Drehgeber 5 der Spindel 18a zugeordnet ist. Dann sind beide Drehgeber 4, 5 innerhalb eines Teilantriebsstrangs 3a angeordnet.

Aus den obigen Ausführungen geht hervor, daß den Drehgebern 4, 5 stets Elemente 4b, 5b, 7, 8, 19a, 19b zugeordnet sind, die bei einer Verstellung des Funktionselements 1 in Drehung versetzt werden und die Erzeugung der entsprechenden Drehgebersignale auslösen. Diese Elemente werden hier als Drehgeberrotoren bezeichnet. Der nach Art eines Sensors arbeitende Teil der Drehgeber 4, 5 wird als Drehgebersensor bezeichnet.

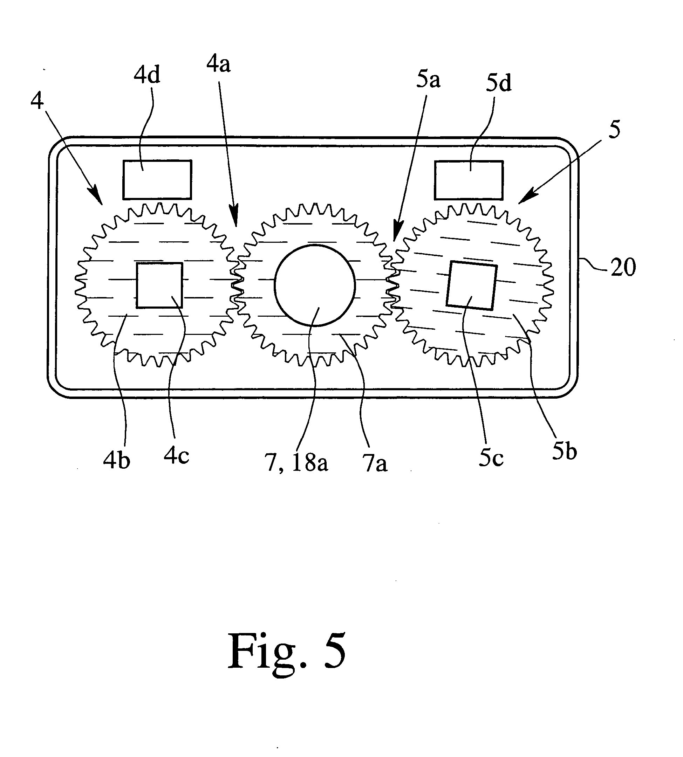

Erfindungsgemäß ist es nicht unbedingt notwendig, daß die beiden Drehgeber 4, 5 unterschiedlichen Antriebskomponenten 7, 8 des Antriebsstrangs 3 zugeordnet sind. In einer bevorzugten Ausgestaltung gemäß Fig. 5 ist es vorgesehen, daß beide Drehgeber 4, 5 derselben Antriebskomponente 7 zugeordnet sind und, vorzugsweise, daß zwischen die Antriebskomponente 7 und den einen Drehgeber 4 ein erstes Drehgebergetriebe 4a und zwischen die Antriebskomponente 7 und den anderen Drehgeber 5 ein zweites Drehgebergetriebe 5a geschaltet ist. Die Auslegungen der Drehgebergetriebe 4a, 5a sind so aufeinander abgestimmt, daß bei der Verstellung des Funktionselements 1 ein Versatz zwischen den Drehgebersignalen der beiden Drehgebersignale 4, 5 entsteht. Aus diesem Versatz läßt sich dann wie oben erläutert die Absolutposition des Funktionselements 1 ermitteln. Bei dieser bevorzugten Ausgestaltung ist irgendwie dafür zu sorgen, daß der Versatz zwischen den Drehgebersignalen der beiden Drehgeber 4, 5 zustandekommt. Dies läßt sich einfach dadurch erreichen, daß die Übersetzung des einen Drehgebergetriebes 4a geringfügig unterschiedlich zu der Übersetzung des anderen Drehgebergetriebes 5a ist.

Die zuletzt beschriebene Ausgestaltung, bei der beide Drehgeber 4, 5 derselben Antriebskomponente 7 zugeordnet sind, läßt sich auch mit einer in Fig. 2 dargestellten Spindelantriebsanordnung erreichen. Hier ist es vorgesehen, daß der mindestens eine Antrieb 9a, 9b als Spindelantrieb mit einem Spindel-Spindelmutter-Getriebe ausgestaltet ist und daß sowohl der eine Drehgeber 4 als auch der andere Drehgeber 5 dem Spindelantrieb 9a, vorzugsweise der Spindel 18a des Spindelantriebs 9a, zugeordnet ist. Dabei ist es weiter vorzugsweise vorgesehen, daß zwischen den Spindelantrieb 9a, insbesondere die Spindel 18a des Spindelantriebs 9a, und den einen Drehgeber 4 ein erstes Drehgebergetriebe 4a und zwischen den Spindelantrieb 9a, insbesondere die Spindel 18a des Spindelantriebs 9a, und den anderen Drehgeber 5 ein zweites Drehgebergetriebe 5a geschaltet ist und daß die Auslegungen der Drehgebergetriebe 4a, 5a so aufeinander abgestimmt sind, daß bei der Verstellung des Funktionselements 1 ein Versatz zwischen den Drehgebersignalen der beiden Drehgeber 4, 5 entsteht.

Die in Fig. 5 dargestellte Ausgestaltung, bei der beide Drehgeber 4, 5 einer bestimmten Antriebskomponente 7 zugeordnet sind, ist besonders kompakt aufgebaut. Wie bei den oben angesprochenen bevorzugten Ausgestaltungen sind die Drehgeber 4, 5 jeweils mit einem Drehgeberrotor 4b, 5b und einem Drehgebersensor 4d, 5d ausgestattet, wobei die Drehgeberrotoren 4b, 5b über den gesamten Verstellweg des Funktionselements 1 jeweils mehrere Umdrehungen ausführen.

Interessant ist hier die Tatsache, daß die Drehgeberrotoren 4b, 5b der beiden Drehgeber 4, 5 mit einer noch zu erläuternden Ausnahme identisch ausgestaltet sind.

Hier und vorzugsweise ist es so, daß die Drehgeberrotoren 4b, 5b der beiden Drehgeber 4, 5 jeweils einen Magneten 4c, 5c tragen. Dabei sind die beiden Drehgebersensoren 4d, 5d vorzugsweise als MR- bzw. als AMR-Sensoren ausgestaltet.

Die Drehgeberrotoren 4b, 5b sind weiter vorzugsweise jeweils als Stirnrad ausgestaltet. Sie kämmen jeweils mit demselben Stirnrad 7a der Antriebskomponente 7. Damit bilden die Drehgeberrotoren 4b, 5b einen Bestandteil der Drehgebergetriebe 4a, 5a, was zu einer besonders kompakten Anordnung führt. Die Zähnezahlen der als Stirnrad ausgestalteten Drehgeberrotoren 4b, 5b sind nur geringfügig unterschiedlich. Vorzugsweise unterscheiden sich die beiden Stirnräder um nur einen Zahn. Die Drehgeberrotoren 4b, 5b unterscheiden sich damit nur hinsichtlich ihrer Zähnezahlen, letztlich also nur hinsichtlich ihrer Kopplung zu der Antriebskomponente 7. Dies ist die oben angesprochene Ausnahme betreffend die im übrigen identisch ausgestalteten Drehgeberrotoren 4b, 5b.

Auffallend bei der in Fig. 5 dargestellten und insoweit bevorzugten Ausgestaltung ist die Tatsache, daß die drei Stirnräder 4b, 5b und 7a sehr ähnliche Durchmesser (und ähnliche Zähnezahlen) aufweisen. Vorzugsweise ist es so, daß das resultierende Drehzahl-Übersetzungsverhältnis zwischen den als Stirnrad ausgestalteten Drehgeberrotoren 4b, 5b und dem Stirnrad 7a der entsprechenden Antriebskomponente 7 jeweils zwischen 0,9 und 1,1, vorzugsweise zwischen 0,95 und 1,05, weiter vorzugsweise zwischen 0,97 und 1,03, liegt. Dabei liegt das Drehzahl-Übersetzungsverhältnis zwischen einem der beiden Drehgeberrotoren 4b, 5b und dem Stirnrad 7a der entsprechenden Antriebskomponente 7 vorzugsweise bei 1,0.

Die gesamte Positionserfassungsanordnung ist hier und vorzugsweise in einem gemeinsamen Gehäuse 20 angeordnet. Dieses Gehäuse 20 ist vorzugsweise in das Gehäuse der Antriebsanordnung 2 integriert.

Alle obigen zu dem Aufbau der Drehgeber 4, 5 mit Drehgeberrotor 4b, 5b und Drehgebersensor 4d, 5d gemachten Ausführungen gelten entsprechend für die in den Fig. 2 und 3 dargestellten Ausgestaltungen.

Es läßt sich zusammenfassen, daß für die Ausgestaltung der Drehgebergetriebe 4a, 5a zahlreiche Möglichkeiten denkbar sind. Im einfachsten Falle handelt es sich hierbei wie erläutert jeweils nur um ein einzelnes, zwischengeschaltetes Stirnrad. Bei der in Fig. 5 dargestellten und insoweit bevorzugten Ausgestaltung ist es vorgesehen, daß eine Antriebskomponente 7, hier die Spindel 18a des Spindelantriebs 9a, ein Stirnrad 7a trägt, das einerseits mit einem dem einen Drehgeber 4 zugeordneten Stirnrad 4b (Drehgeberrotor 4b) und andererseits mit einem dem anderen Drehgeber 5 zugeordneten Stirnrad 5b (Drehgeberrotor 5b) kämmt. Dabei weisen die beiden den Drehgebern 4, 5 zugeordneten Stirnräder 4b, 5b unterschiedliche Zähneanzahlen auf, so daß bei einer Verstellung des Funktionselements 1 die beiden Stirnräder 4b, 5b mit unterschiedlicher Geschwindigkeit drehen.

Grundsätzlich kann auch ein zusätzlicher, nicht dargestellter Drehgeber vorgesehen sein, um die Bewegungsrichtung des Funktionselements 1 erfassen zu können. Dieser weitere Drehgeber ist vorzugsweise so angeordnet, daß er Drehgebersignale liefert, die phasenversetzt zu den Drehgebersignalen eines der anderen beiden Drehgeber 4, 5 liefert. In besonders bevorzugter Ausgestaltung ist der weitere Drehgeber aber unmittelbar an der jeweiligen Motoreinheit angeordnet.

Üblicherweise ist die Antriebsanordnung 2 mit einer ebenfalls nicht dargestellten Kupplung ausgestattet. Damit ist es möglich, das Funktionselement 1 auch manuell zu verstellen. Dies ist insbesondere bei der Ausgestaltung des Funktionselements 1 als Heckklappe o. dgl. eines Kraftfahrzeugs vorteilhaft. Die Drehgeber 4, 5 sind dann vorzugsweise auf der Abtriebsseite der Kupplung angeordnet, so daß auch eine manuelle Verstellung des Funktionselements 1, die üblicherweise bei stillstehender Motoreinheit erfolgt, durch die Steuerungseinrichtung 6 erfaßt werden kann.

Besonders vorteilhaft ist bei der vorschlagsgemäßen Positionserfassungsanordnung die Tatsache, daß eine Referenzierung nach einer manuellen Verstellung des Funktionselements 1 nicht notwendig ist. Notwendig ist anschließend, sofern mit der oben angesprochenen Ermittlung einer Zeitdifferenz gearbeitet wird, lediglich ein langsames Wiederanfahren des Funktionselements 1, bis der obige Versatz zwischen den Drehgebersignalen und entsprechend die Absolutposition des Funktionselements 1 ermittelt wurde. Dann kann der Normalbetrieb wieder aufgenommen werden. Dies gilt natürlich auch für den Fall, daß die Stromversorgung ausfällt.

Grundsätzlich ist es auch denkbar, daß zusätzlich die Impulse der Drehgebersignale der beiden Drehgeber 4, 5 bei der Verstellung des Funktionselements gezählt werden, um wiederum die Absolutposition des Funktionselements 1 ermitteln zu können. Damit liegen zwei Möglichkeiten zur Ermittlung der Absolutposition vor. Bei geeignetem Abgleich kann die Meßgenauigkeit dadurch erhöht werden.

Es darf darauf hingewiesen werden, daß es sich bei der Antriebskomponente 7 bzw. den Antriebskomponenten 7, der bzw. denen die Drehgeber 4, 5 zugeordnet sind, vorzugsweise um rotatorische Antriebskomponenten 7 handelt, die über den gesamten Verstellweg des Funktionselements 1 mehrere Umdrehungen, vorzugsweise mehr als 8, weiter vorzugsweise mehr als 10, weiter vorzugsweise mehr als 15 Umdrehungen ausführen.

Es darf ferner darauf hingewiesen werden, daß für die Ausgestaltung des Drehgeberrotors 4b, 5b zahlreiche Varianten denkbar sind. Neben den oben angesprochenen Varianten mit Magneten ist auch eine Ausgestaltung nach Art einer Lochscheibe o. dgl. denkbar.

Nach einer zweiten Lehre, der eigenständige Bedeutung zukommt, wird eine Antriebseinheit für ein verstellbares Funktionselement 1 mit der beschriebenen Antriebsanordnung 2 zur motorischen Verstellung des Funktionselements 1 und der beschriebenen Positionserfassungsanordnung zur Erfassung der Position des Funktionselements 1 beansprucht.

Nach einer dritten Lehre, der ebenfalls eigenständige Bedeutung zukommt, wird außerdem eine Funktionseinheit in einem Kraftfahrzeug mit dem beschriebenen Funktionselement 1, der beschriebenen Antriebsanordnung 2 und der beschriebenen Positionserfassungsanordnung zur Erfassung der Position des Funktionselements 1 als solche beansprucht.

Für beide weiteren Lehren gelten alle obigen Ausführungen zu Vorteilen und Varianten entsprechend. Dies betrifft insbesondere die möglichen Varianten des Funktionselements 1, die im einleitenden Teil der Beschreibung erläutert wurden.

## Patentansprüche

1. Positionserfassungsanordnung für ein motorisch verstellbares Funktionselement (1) in einem Kraftfahrzeug, wobei eine Antriebsanordnung (2) über einen Antriebsstrang (3) mit dem Funktionselement (1) gekoppelt und das Funktionselement (1) **dadurch** motorisch verstellbar ist, wobei zwei inkrementale Drehgeber (4, 5) vorgesehen sind, die dem Antriebsstrang (3) zugeordnet sind und wobei eine Steuerungseinrichtung (6) vorgesehen ist, die mit den Drehgebern (4, 5) gekoppelt ist,
**dadurch gekennzeichnet,**
**daß** die Anordnung so getroffen ist, daß bei der Verstellung des Funktionselements (1) ein Versatz zwischen den Drehgebersignalen der beiden Drehgeber (4, 5) entsteht und
**daß** die Steuerungseinrichtung (6) so ausgelegt ist, daß sie aus dem Versatz die Absolutposition des Funktionselements (1) ermittelt.

2. Positionserfassungsanordnung nach Anspruch 1, **dadurch gekennzeichnet, daß** der eine Drehgeber (4) einer ersten Antriebskomponente (7) des Antriebsstrangs (3) und der andere Drehgeber (5) einer zweiten Antriebskomponente (8) des Antriebsstrangs (3) zugeordnet ist, daß diese beiden Antriebskomponenten (7, 8) bei der Verstellung des Funktionselements (1) unterschiedlich schnell drehen, daß **dadurch** ein Versatz zwischen den Drehgebersignalen der beiden Drehgeber (4, 5) entsteht und daß die Steuerungseinrichtung (6) so ausgelegt ist, daß sie aus dem Versatz die Absolutposition des Funktionselements (1) ermittelt.

3. Positionserfassungsanordnung nach Anspruch 1 oder 2, **dadurch gekennzeichnet, daß** die Drehgeber (4, 5) bei konstanter Verstellung des Funktionselements (1) jeweils Drehgebersignale mit unterschiedlichen Impulsfrequenzen erzeugen, vorzugsweise, daß die eine Impulsfrequenz kein ganzzahliges Vielfaches der anderen Impulsfrequenz ist und/oder, daß sich die eine Impulsfrequenz nur geringfügig von der anderen Impulsfrequenz unterscheidet.

4. Positionserfassungsanordnung nach einem der vorhergehenden Ansprüche, **dadurch gekennzeichnet, daß** die beiden Drehgeber (4, 5) bei der Verstellung des Funktionselements (1) Drehgebersignale mit zumindest qualitativ identischer Impulsform erzeugen.

5. Positionserfassungsanordnung nach einem der vorhergehenden Ansprüche, **dadurch gekennzeichnet, daß** die beiden Drehgeber (4, 5) bei der Verstellung des Funktionselements (1) im wesentlichen sinusförmige, parabelförmige oder sägezahnförmige Drehgebersignale erzeugen.

6. Positionserfassungsanordnung nach einem der vorhergehenden Ansprüche 1, **dadurch gekennzeichnet, daß** die Steuerungseinrichtung (6) die Absolutposition des Funktionselements (1) aus der Zeitdifferenz zwischen einem Impuls des einen Drehgebers (4) und dem darauffolgenden Impuls des anderen Drehgebers (5) ermittelt.

7. Positionserfassungsanordnung nach einem der vorhergehenden Ansprüche, **dadurch gekennzeichnet, daß** die Steuerungseinrichtung (6) die Absolutposition des Funktionselements (1) aus der Phasendifferenz zwischen dem aktuellen Impuls des einen Drehgebers (4) und dem aktuellen Impuls des anderen Drehgebers (5) ermittelt.

8. Positionserfassungsanordnung nach einem der vorhergehenden Ansprüche, **dadurch gekennzeichnet, daß** die Drehgeber (4, 5) unterschiedlich konfiguriert sind, so daß die Drehgeber (4, 5) pro Umdrehung der entsprechenden Antriebskomponente (7, 8) eine unterschiedliche Anzahl von Impulsen generieren.

9. Positionserfassungsanordnung nach einem der vorhergehenden Ansprüche, **dadurch gekennzeichnet, daß** die Drehgeber (4, 5) als magnetische Sensoren, als induktive Sensoren oder als optische Sensoren ausgestaltet sind, vorzugsweise, daß die Drehgeber (4, 5) als Hall-Sensoren ausgestaltet sind, oder, daß die Drehgeber (4, 5) als MR-Winkelsensoren ausgestaltet sind, oder, daß die Drehgeber (4, 5) als AMR-Winkelsensoren ausgestaltet sind.

10. Positionserfassungsanordnung nach einem der vorhergehenden Ansprüche, **dadurch gekennzeichnet, daß** das Funktionselement (1) als Verschlußelement o.dgl. eines Kraftfahrzeugs ausgestaltet ist, vorzugsweise, daß das Funktionselement (1) als Heckklappe o. dgl. eines Kraftfahrzeugs ausgestaltet ist.

11. Positionserfassungsanordnung nach einem der vorhergehenden Ansprüche, **dadurch gekennzeichnet, daß** die Antriebsanordnung (2) mindestens einen Antrieb (9) mit einer Motoreinheit (10) und einem nachgeschalteten Getriebe (11) aufweist, der über den Antriebsstrang (3) auf das Funktionselement (1) wirkt, daß das Getriebe (11) als mehrstufiges Getriebe (11) ausgestaltet ist und daß die Drehgeber (4, 5) unterschiedlichen Getriebestufen zugeordnet sind, oder, daß der eine Drehgeber (4) der Motoreinheit (10) und der andere Drehgeber (5) dem Getriebe (11) zugeordnet ist.

12. Positionserfassungsanordnung nach einem der vorhergehenden Ansprüche, **dadurch gekennzeichnet, daß** die Antriebsanordnung (2) zwei Antriebe (9a, 9b) aufweist, die über zwei Teilantriebsstränge (3a, 3b) auf das Funktionselement (1) wirken und daß der eine Drehgeber (4) einer Antriebskomponente (7) des einen Teilantriebsstrangs (3a) und der andere Drehgeber (5) einer Antriebskomponente (8) des anderen Teilantriebsstrangs (3b) zugeordnet ist und daß diese beiden Antriebskomponenten (7, 8) bei der Verstellung des Funktionselements (1) unterschiedlich schnell drehen, vorzugsweise, daß die beiden Antriebe (9a, 9b) als Spindelantriebe mit einem Spindel-Spindelmutter-Getriebe ausgestaltet sind, daß der eine Drehgeber (4) dem einen Spindelantrieb (9a) und der andere Drehgeber (5) dem anderen Spindelantrieb (9b) zugeordnet ist.

13. Positionserfassungsanordnung nach einem der vorhergehenden Ansprüche, **dadurch gekennzeichnet, daß** beide Drehgeber (4, 5) derselben Antriebskomponente (7) des Antriebsstrangs (3) zugeordnet sind, vorzugsweise, daß zwischen die Antriebskomponente (7) und den einen Drehgeber (4) ein erstes Drehgebergetriebe (4a) und zwischen die Antriebskomponente (7) und den anderen Drehgeber (5) ein zweites Drehgebergetriebe (5a) geschaltet ist und daß die Auslegungen der Drehgebergetriebe (4a, 5a) so aufeinander abgestimmt sind, daß bei der Verstellung des Funktionselements (1) ein Versatz zwischen den Drehgebersignalen der beiden Drehgeber (4, 5) entsteht.

14. Positionserfassungsanordnung nach einem der vorhergehenden Ansprüche, **dadurch gekennzeichnet, daß** der mindestens eine Antrieb (9a, 9b) als Spindelantrieb mit einem Spindel-Spindelmutter-Getriebe ausgestaltet ist und daß sowohl der eine Drehgeber (4) als auch der andere Drehgeber (5) dem Spindelantrieb (9a), vorzugsweise der Spindel (18a) des Spindelantriebs (9a), zugeordnet ist, vorzugsweise, daß zwischen den Spindelantrieb (9a) und den einen Drehgeber (4) ein erstes Drehgebergetriebe (4a) und zwischen den Spindelantrieb (9a) und den anderen Drehgeber (5) ein zweites Drehgebergetriebe (4b) geschaltet ist und daß die Auslegungen der Drehgebergetriebe (4a, 4b) so aufeinander abgestimmt sind, daß bei der Verstellung des Funktionselements (1) ein Versatz zwischen den Drehgebersignalen der beiden Drehgeber (4, 5) entsteht.

15. Positionserfassungsanordnung nach einem der vorhergehenden Ansprüche, **dadurch gekennzeichnet, daß** die Drehgeber (4, 5) jeweils einen Drehgeberrotor (4b, 5b) und einen Drehgebersensor (4d, 5d) aufweisen und daß die Drehgeberrotoren (4b, 5b) über den gesamten Verstellweg des Funktionselements (1) jeweils mehrere Umdrehungen ausführen, vorzugsweise, daß die Drehgeberrotoren (4b, 5b) der beiden Drehgeber (4, 5) jeweils einen Magneten (4c, 5c) tragen.

16. Positionserfassungsanordnung nach Anspruch 15, **dadurch gekennzeichnet, daß** die Drehgeberrotoren (4b, 5b), ggf. mit Ausnahme der Kopplung zu der jeweiligen Antriebskomponente (7), identisch ausgestaltet sind.

17. Positionserfassungsanordnung nach Anspruch 15 oder 16, **dadurch gekennzeichnet, daß** die Drehgeberrotoren (4b, 5b) der beiden Drehgeber (4, 5) jeweils als Stirnrad ausgestaltet sind und daß die beiden Drehgeberrotoren (4b, 5b) jeweils mit demselben Stirnrad (7a) der entsprechenden Antriebskomponente (7) kämmen, vorzugsweise, daß das Drehzahl-Übersetzungsverhältnis zwischen den als Stirnrad ausgestalteten Drehgeberrotoren (4b, 5b) und dem zugeordneten Stirnrad (7a) der entsprechenden Antriebskomponente (7) jeweils zwischen 0,9 und 1,1, vorzugsweise zwischen 0,95 und 1,05, weiter vorzugsweise zwischen 0,97 und 1,03, liegt.

18. Antriebseinheit für ein verstellbares Funktionselement (1) mit einer Antriebsanordnung (2) zur motorischen Verstellung des Funktionselements (1) und einer Positionserfassungsanordnung zur Erfassung der Position des Funktionselements (1), wobei die Antriebsanordnung (2) im eingebauten Zustand über einen Antriebsstrang (3) mit dem Funktionselement (1) gekoppelt ist, wobei zwei inkrementale Drehgeber (4, 5) vorgesehen sind, die dem Antriebsstrang (3) zugeordnet sind und wobei eine Steuerungseinrichtung (6) vorgesehen ist, die mit den Drehgebern (4, 5) gekoppelt ist,
**gekennzeichnet durch**
die Merkmale des kennzeichnenden Teils einer oder mehrerer der vorhergehenden Ansprüche.

19. Funktionseinheit in einem Kraftfahrzeug mit einem motorisch verstellbaren Funktionselement (1), einer Antriebsanordnung (2) und einer Positionserfassungsanordnung zur Erfassung der Position des Funktionselements (1), wobei die Antriebsanordnung (2) über einen Antriebsstrang (3) mit dem Funktionselement (1) gekoppelt ist und das Funktionselement (1) **dadurch** motorisch verstellbar ist, wobei zwei Drehgeber (4, 5) vorgesehen sind, die dem Antriebsstrang (3) zugeordnet sind und wobei eine Steuerungseinrichtung (6) vorgesehen ist, die mit den Drehgebern (4, 5) gekoppelt ist,
**gekennzeichnet durch**
die Merkmale des kennzeichnenden Teils der Ansprüche 1 bis 17.
